(19) Europäisches Patentamt

European Patent Office

Office européen des brevets

(11) **EP 1 093 848 A1**

(12) **EUROPEAN PATENT APPLICATION**
published in accordance with Art. 158(3) EPC

(43) Date of publication:
25.04.2001 Bulletin 2001/17

(51) Int. Cl.[7]: **B01J 19/08**, B01D 53/70

(21) Application number: 00917283.4

(86) International application number:
PCT/JP00/02367

(22) Date of filing: 12.04.2000

(87) International publication number:
WO 00/61285 (19.10.2000 Gazette 2000/42)

(84) Designated Contracting States:
AT BE CH CY DE DK ES FI FR GB GR IE IT LI LU
MC NL PT SE

(30) Priority: 12.04.1999 JP 10460999

(71) Applicant:
Mitsubishi Heavy Industries, Ltd.
Tokyo 100-8315 (JP)

(72) Inventors:
• BESSHO, Masahiro,
Mitsubishi Heavy Industr., Ltd.
Nakamura-ku, Nagoya-shi, Aichi 453-8515 (JP)

• HATTORI, Toshio,
Mitsubishi Heavy Industr., Ltd.
Nakamura-ku, Nagoya-shi, Aichi 453-8515 (JP)
• TSUBAKI, Yasuhiro,
Mitsubishi Heavy Indust., Ltd.
Nakamura-ku, Nagoya-shi, Aichi 453-8515 (JP)

(74) Representative:
Des Termes, Monique et al
c/o Société de Protection des Inventions
3, rue du Docteur Lancereaux
75008 Paris (FR)

(54) **ORGANIC HALOGEN COMPOUND DECOMPOSING DEVICE**

(57) It is an object of the present invention to provide an apparatus for decomposing organohalogen compounds that can have a dense and compact construction. Disclosed is an apparatus for decomposing organohalogen compounds, including a waste gas processing tank 41 that contains an alkali solution, a blow tube 45 having an opening at one end thereof which is immersed in the alkali solution, a reactor tube 15 connected to said blow tube 45 and a rectangular waveguide 1 connected to the top of said reactor tube 15, wherein said rectangular waveguide 1 extends horizontally and a chamber 10 is provided below the rectangular waveguide 1.

FIG. 1

EP 1 093 848 A1

## Description

TECHNICAL FIELD

The present invention relates to an apparatus for decomposing organohalogen compounds by using plasma and, more particularly, to an apparatus for decomposing organohalogen compounds that generates plasma by means of microwaves.

BACKGROUND ART

Organohalogen compounds such as chlorofluorocarbons (CFCs; Freon), trichloromethane and halon that contain such elements as fluorine, chlorine and bromine in the molecules thereof are used in large quantities in broad applications including refrigerants, solvents and fire extinguishers, and have very high practical values for industrial applications.

However, these compounds have high volatility and may have adverse effects on the environment such as generation of carcinogens and destruction of the ozone layer, when released to the atmosphere, soil, or natural bodies of water without proper treatment. Thus the organohalogen compounds must be processed to make them harmless in order to protect the environment.

Known methods of the prior art for processing the organohalogen compounds mostly utilize the reaction of decomposition at high temperatures. These treatment processes are roughly divided into combustion process and plasma process.

In the combustion process, the organohalogen compounds are burned out in a cement kiln or rotary kiln. In the plasma process, the organohalogen compounds react with steam in plasma thereby to decompose into carbon dioxide, hydrogen chloride and hydrogen fluoride.

As an example of organohalogen compound decomposition apparatus which uses the plasma process, there is known one that uses induction-generated plasma.

This decomposition apparatus includes a waste gas processing tank that contains an alkali solution, a takeout tube having an opening at the lower end thereof which is immersed in the alkali solution, a reactor furnace communicating with the takeout tube, and a plasma torch located above the reactor furnace and directly coupled with the reactor furnace.

In this decomposition apparatus, with argon gas supplied into the plasma torch, high-frequency current is supplied to the plasma torch to generate plasma. Thus in the reactor furnace where high-temperature atmosphere is generated, the organohalogen compounds react with steam and decompose. Product gas generated in the decomposition reaction is sent through the exhaust tube and introduced into the alkali solution contained in the waste gas processing tank, where the product gas is neutralized. Other gas containing carbon dioxide is released through an exhaust duct.

Recently, an apparatus that generates plasma by using microwaves has been developed. As a decomposition apparatus which uses microwaves is characterized by a smaller construction than a decomposition apparatus which uses induction-generated plasma, there are demands for an apparatus that requires even more smaller floor space.

DISCLOSURE OF INVENTION

The present invention has been made in view of the situation described above, and an object thereof is to provide an organohalogen compound decomposition apparatus of a dense and compact construction.

In order to achieve the object described above, the present invention employs the following constitutions.

First organohalogen compound decomposition apparatus includes a waste gas processing tank that contains an alkali solution, a blow tube having an opening at one end thereof which is immersed in the alkali solution, a reactor tube communicating with the blow tube, and a rectangular waveguide connected to the reactor furnace at the top thereof, wherein the rectangular waveguide extends horizontally.

This organohalogen compound decomposition apparatus can be made low in height, since the rectangular waveguide is disposed to extend horizontally.

Second organohalogen compound decomposition apparatus is a variation of the first organohalogen compound decomposition apparatus where the blow tube and the reactor tube are connected to each other substantially in a straight line, while the reactor tube is located above the waste gas processing tank.

In this organohalogen compound decomposition apparatus, since the reactor tube is located above the waste gas processing tank, the rectangular waveguide crosses the waste gas processing tank and the reactor tube at right angles, forming a substantially L-shaped configuration. This allows a space to accommodate an ancillary apparatus to be formed below the rectangular waveguide. Also because the reactor tube is located above the waste gas processing tank, the space above the waste gas processing tank can be effectively utilized. Moreover, since the passage of gases containing rare gas is formed almost straight between the reactor tube and the blow tube, there is no obstruction to the flow of fluid by bending passage, and hold-up of corrosive fluid does not occur.

Third organohalogen compound decomposition apparatus is a variation of the first or second organohalogen compound decomposition apparatus where a chamber is provided below the rectangular waveguide beside the waste gas processing tank.

In this organohalogen compound decomposition apparatus, since the chamber is provided below the rectangular waveguide, various ancillary apparatuses for the decomposition apparatus can be installed in the chamber, thus effectively utilizing the space below the rectangular waveguide.

Fourth organohalogen compound decomposition apparatus is a variation of the third organohalogen compound decomposition apparatus where the chamber houses a fluid source that supplies fluid to the waste gas processing tank.

In this organohalogen compound decomposition apparatus, the space below the rectangular waveguide can be effectively utilized by installing a rare gas cylinder or a water tank as the fluid source in the chamber.

Fifth organohalogen compound decomposition apparatus is a variation of the third or fourth organohalogen compound decomposition apparatus where the chamber accommodates at least one among a cooler that cools a processing liquid contained in the waste gas processing tank, a solid-liquid separator that takeout the processing liquid and separates solid component therefrom, a gas cylinder that supplies a gas to the reactor tube, an air compressor that supplies air to the reactor tube, water tank that supplies water to the reactor tube and a controller that controls the decomposition process.

In this organohalogen compound decomposition apparatus, since the chamber is provided, the space below the rectangular waveguide can be effectively utilized. Specifically, ancillary apparatuses such as the cooler, the solid-liquid separator, the gas cylinder, the air compressor, the water tank and the controller can be housed in the chamber.

BRIEF DESCRIPTION OF DRAWINGS

Fig. 1 is a system diagram showing one embodiment of the decomposition apparatus according to the present invention.
Fig. 2 is a perspective view showing the overall constitution of the decomposition apparatus.
Fig. 3 is an enlarged view of a key portion of the decomposition apparatus.
Fig. 4 is a sectional view of a key portion of a mixer of the decomposition apparatus.
Fig. 5 is a timing chart showing the timing of generating microwaves, supplying argon and other gases and ignition in the decomposition apparatus.

BEST MODE OF CARRYING OUT THE INVENTION

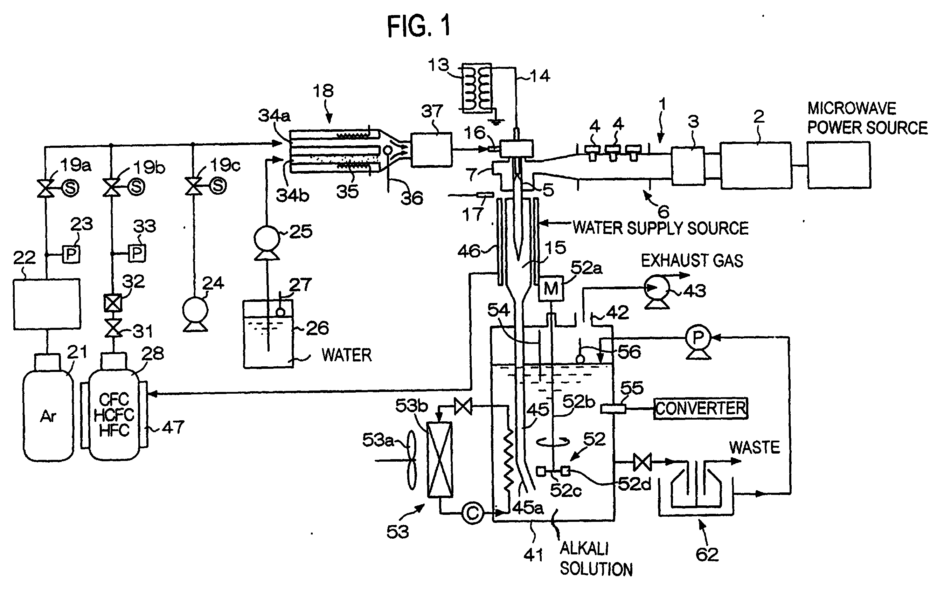

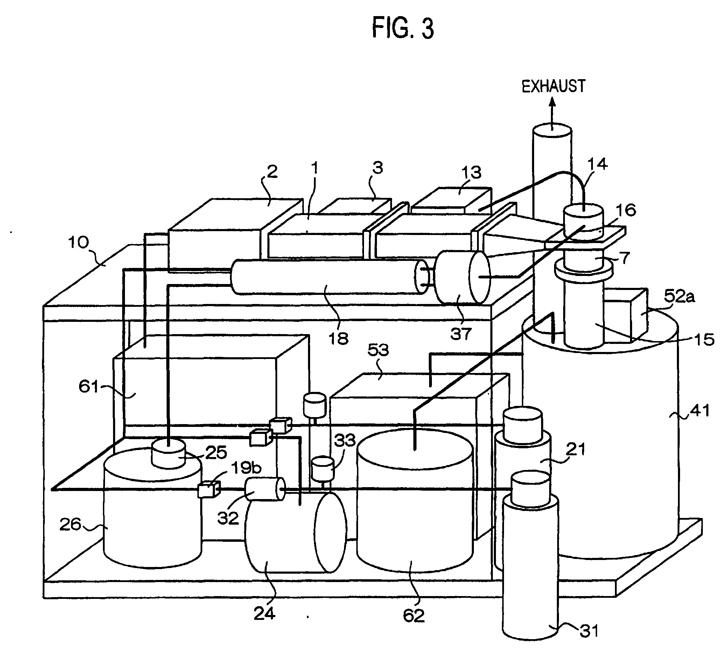

Now an embodiment of the present invention will be described below with reference to Fig. 1 to Fig. 5.
the organohalogen compound decomposition apparatus of this embodiment includes, as shown in Fig. 3, a waste gas processing tank 41 that contains an alkali solution, a reactor tube 15 having an opening at one end thereof which is immersed in the alkali solution, a circular waveguide 7 extending vertically above the reactor tube 15, and a discharge tube disposed inside of the circular waveguide 7 while penetrating through the bottom end thereof and communicating with the reactor tube.

A rectangular waveguide 1 extends horizontally and is connected, at near an end thereof, to the circular waveguide 7.

Specifically, the rectangular waveguide crosses the reactor tube 15 and the waste gas processing tank 41 at right angles to form a substantially L-shaped configuration, while allowing a space to accommodate ancillary apparatuses to be formed below the rectangular waveguide 1. This space is called a chamber 10, where ancillary apparatuses of the decomposition apparatus can be accommodated, thereby achieving a denser and more compact construction of the apparatus.

The apparatus will be descried in more detail below.

In Fig. 3, the rectangular waveguide 1 that extends horizontally has a microwave oscillator 2 that generates microwaves at a frequency 2.45 GHz mounted on a proximal end (left side end) thereof, and transmits microwaves from the proximal end to the distal end (right side end).

The rectangular waveguide 1 has, as shown in Fig. 1, an isolator 3 that absorbs the microwaves, that have reflected on the distal end and returned to the proximal end, thereby preventing the reflected waves from affecting the oscillator side, and a tuner 6 that controls the amount of undulatory mismatch of microwaves by adjusting the positions of a plurality of wave adjusting members 4 thereby converging the microwaves into the discharge tube 5.

This operation of the apparatus will be described in more detail below.

The microwave oscillator 2 drives a magnetron, mounted at one end of a waveguide that has a rectangular cross section, to generate electromagnetic waves of a predetermined frequency. While the propagation of the electromagnetic waves can be determined by solving the Maxwell's electromagnetic wave equation, the microwaves in this case propagate in TE mode where there is no electric field component in the direction of propagation.

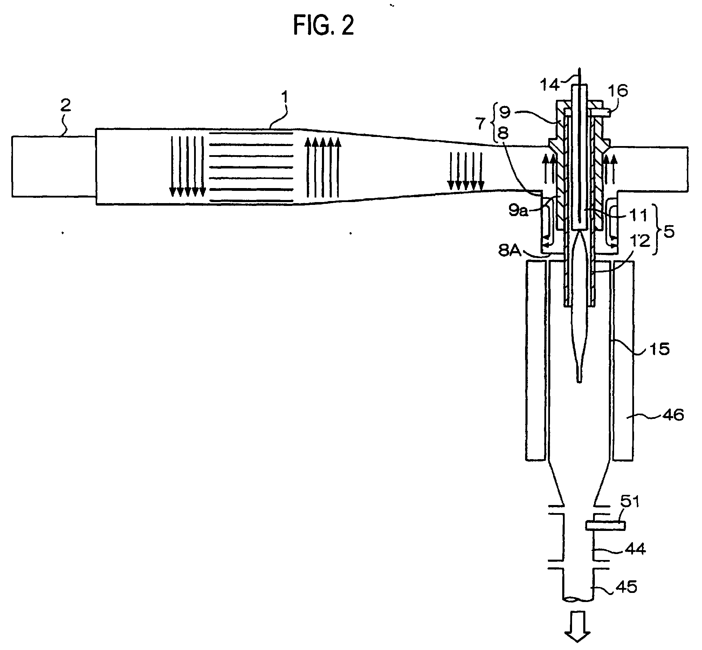

An example of the first order component $TE_{10}$ of this electromagnetic waves is shown by arrows of alternating directions in Fig. 2 in the longitudinal section of the rectangular waveguide. In a ring-shaped cavity of a double circular waveguide consisting of double cylindrical conductors formed at the other end of the rectangular waveguide 1, electromagnetic waves of TE mode having electric field component in the direction of propagation are generated due to coupling by a conductor 9 of the electromagnetic waves propagating in the waveguide 1 and the electromagnetic waves reflected on the end of the waveguide.

The first order component $TE_{10}$ of this electromagnetic waves in the ring-shaped cavity is similarly shown by arrows in Fig. 2.

Fine adjustment related to the secondary and higher harmonics of the electromagnetic waves is done by means of the tuner 4.

The isolator 3 protects the microwave oscillator 2 from serious damage.

The circular waveguide 7 includes an outer conductor 8 and the inner conductor 9 that has a diameter smaller than that of the outer conductor, as shown in Fig. 2, and is connected to extend vertically while communicating with the rectangular waveguide 1 near the distal end of the rectangular waveguide 1.

The inner conductor 9 is fastened on top of the rectangular waveguide 1 and extends toward an end plate 8a of the outer conductor 8 while surrounding the discharge tube 5 made of quartz, with the extending portion serving as a probe antenna 9a.

The discharge tube 5 consists of an inner tube 11 and an outer tube 12, and is disposed to be concentric with the center axis of the circular waveguide 7.

The inner tube 11 of the discharge tube 5 accommodates a Tesla coil 14, that is driven by the igniter 13 to discharge spark toward the inner tube 11, inserted therein.

Distal end (lower end) of the inner tube 11 is disposed to protrude inward by a predetermined distance from the distal end of the probe antenna 9a.

Distal end of the outer tube 12 penetrates through the end plate 8a of the outer conductor 8 and communicates with the reactor tube 15 made of copper, while the proximal end (upper end) of the outer tube 12 is secured with a clearance kept from the inner conductor 9.

Reference numeral 17 denotes an optical sensor which is disposed to face the outer tube 12 exposed between the end plate 8a of the outer conductor 8 and the reactor tube 15.

The optical sensor 17 monitors the condition of the generation of plasma by measuring the luminous intensity.

Inserted into the clearance described above is a gas feeder pipe 16 along the tangential direction of the outer tube 12, so that argon gas, CFC gas (organohalogen compound), air and steam are supplied to the discharge tube 5 through the gas feeder pipe 16.

The argon gas, CFC gas and air are sent to a heater 18 selectively from the respective sources by switching electromagnetic valves 19a, 19b, 19c shown in Fig. 1.

Argon gas is supplied to facilitate the ignition prior to the generation of plasma, and is stored in an argon gas cylinder 21.

A pressure controller 22 and a pressure switch 23 are installed between the argon gas cylinder 21 and the electromagnetic valve 19a.

The air is supplied from an air compressor 24 for the purpose of improving the stability of ignition by removing residual moisture from the inside of the system and purging residual gas from the system, and air, nitrogen gas, argon gas or the like is used.

Steam is required to decompose the CFC gas, and is generated by supplying water from a water tank 26 by a plunger pump 25 to the heater 18.

The water tank 26 has a level switch 27 installed thereon to detect a variation in the water level.

The argon gas cylinder 21, the air compressor 24 and the water tank 26 are accommodated in the chamber 10, thereby making it possible to achieve a denser and more compact construction of the apparatus. These devices constitute fluid supply sources that supply argon gas, air and water through the reactor tube 15 to the waste gas processing tank 41.

The CFC gas is stored in a recovered CFC cylinder 28 in the state of liquid, while a throttle 31, a mist separator 23 and a pressure switch 33 are installed between the recovered CFC cylinder 28 and the electromagnetic valve 19b.

The throttle 31 is provided to maintain a constant flow, and consists of, for example, a combination of a capillary tube and an orifice plate.

The mist separator 32 is provided for the purpose of removing oil (lubricant) and moisture from CFC gas, and may be of impinging type or centrifugal type.

The heater 18 is installed not only to generate steam that reacts with the CFC gas, but also to preheat the CFC gas and other material so as to avoid such a problem that the steam is cooled by the CFC gas in the apparatus and is condensed, and may be an electric heater, steam heater or other type.

Two parallel flow passages 34a, 34b are formed in the heater 18, while CFC gas, argon gas and air are supplied through the passage 34a, while water from the water tank 26 is supplied through the passage 34b for generating steam.

The passage 34b where steam is generated is filled with a resistive material 35 that applies resistance against the flow of steam therethrough, so that the steam cannot flow through the passage freely.

The resistive material 35 is made of an inorganic or organic material in the form of particles, fibers or a porous body, or a molding thereof, while it is preferable to use an inorganic material such as oxide including $SiO_2$, $Al_2O_3$, $TiO_2$, $MgO$ or $ZrO_2$, carbide or nitride, in order to prevent degradation that would occur at high temperatures.

A thermocouple 36 is installed near the outlet of the heater 18.

The CFC and other gases and steam that have passed the heater 18 are mixed in a mixer 37, and the mixed gas passes through the gas feeder tube 16 and is supplied to the discharge tube 5.

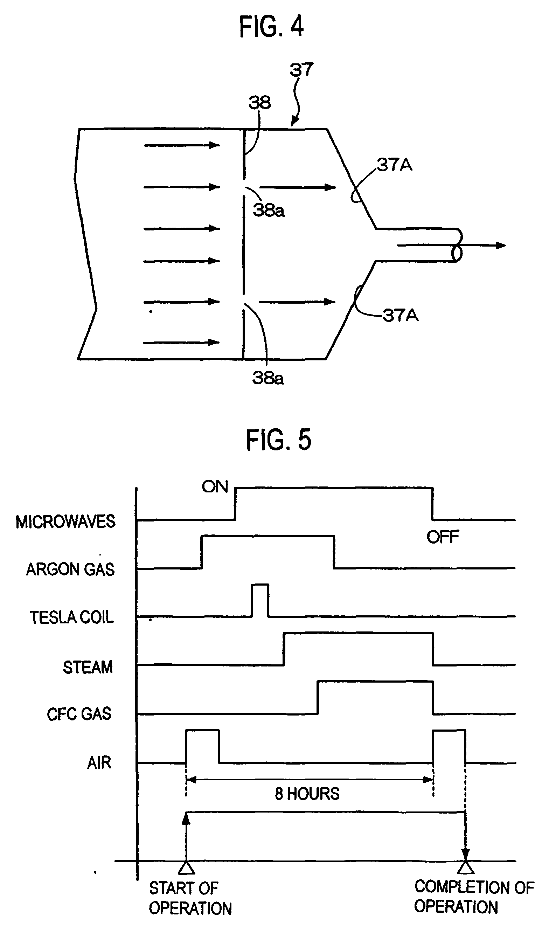

The mixer 37 has an orifice plate 38 installed therein as shown in Fig. 4 having an aperture 38a that is 0.1 to 5 mm in diameter.

An outlet side end face 37A of the mixer 37 to which the aperture 38a faces is tapered so that the sectional area of the passage gradually reduces.

The waste gas processing tank 41 is provided in order to neutralize acidic gases (hydrogen fluoride and hydrogen chloride) that are generated when the CFC gas is decomposed, to make the gases harmless, and contains an alkali suspension made by adding calcium hydroxide to water.

When Freon R12 recovered from a discarded refrigerator is decomposed, for example, product gases generated in the decomposing reaction represented by scheme 1 are neutralized in the reaction represented by scheme 2.

Scheme 1

$$CCl_2F_2 + 2H_2O \rightarrow 2HCl + 2HF + CO_2$$

Scheme 2

$$2HCl + Ca(OH)_2 \rightarrow CaCl_2 + 2H_2O$$

$$2HF + Ca(OH)_2 \rightarrow CaF_2 + 2H_2O$$

Since the neutralization product (calcium chloride and calcium fluoride) generated in the neutralization reaction represented by scheme 2 have low solubility, part thereof are dissolved into the alkali solution but mostly precipitate as slurry.

Carbon dioxide generated through the decomposition reaction of scheme 1 and the acidic gas that has been decreased in concentration to a very low level below a permissible exhaust level by the neutralization reaction represented by scheme 2 are released to the outside of the system by a blower 43 through an exhaust duct 42 connected to the top of the waste gas processing tank 41.

Installed in the waste gas processing tank 41 is a blow tube 45 that is connected to the reactor tube 15 via a detachable joint 44 and which extends vertically with the bottom end thereof being immersed in the alkali solution. Thus since the flow of fluid through the reactor tube 15 and the blow tube 45 is straight, there is no obstruction to the flow of fluid, such as bent passages, and hold-up of corrosive fluid does not occur.

A distal end 45a of the blow tube 45 is formed to incline by a predetermined angle from the vertical direction.

Installed at a middle portion in the axial direction of the reactor tube 15 to surround the circumference thereof is a cooling jacket 46 having a cooling water pipe (not shown).

The cooling jacket 46 is for the purpose of cooling the product gas of the decomposition reaction of scheme 1, and is controlled so as not to lower the temperature below the dew point of the steam in order to prevent the residual steam in the reactor tube 15 from being condensed again.

In this embodiment, the gas is cooled to about 400°C.

The cooling water of the cooling jacket 46 that has been warmed while cooling the reactor tube 15 is used as the heat source for the recovered CFC cylinder 28.

Specifically, the heating jacket 47 having a warm water pipe (not shown) is disposed around the recovered CFC cylinder 28, while the cooling water used to cool the reactor tube 15 is passed through the warm water pipe thereby heating the recovered CFC cylinder 28.

The detachable joint 44 is connected detachably between the reactor tube 15 and the blow tube 45 as shown in Fig. 2, and a water nozzle 51 is installed to communicate with the inside of the detachable joint.

Cooling water is discharged from the water nozzle 51 so as to quickly cool the blow tube 45 that is made of a resin, for example a fluorocarbon resin such as polytetrafluoroethylene, within a tolerable temperature range thereof.

If the blow tube 45 is made of a fluorocarbon resin, cooling to 100°C or lower is desirable.

The reason for using the blow tube 45 made of a resin is that the blow tube 45 is required to have resistance against corrosion by the acidic solution generated from the acidic gas dissolving in the cooling water and resistance against corrosion by alkali solution contained in the waste gas processing tank 41, which are difficult to achieve simultaneously using a metallic tube.

On the other hand, the inside of the reactor tube 15 is kept always dry and is therefore not likely to be corroded, but is required to have heat resistance. Thus the reaction tube is made of copper for longer service life.

The product gas of the decomposition reaction of scheme 1 is released from the distal end (lower end) of the blow tube 45 in the form of bubbles into the alkali solution.

Since the reaction of neutralization by the alkali solution proceeds more quickly when the area of contact between the bubbles and the alkali solution is greater and the time taken by the bubbles to reach the liquid surface is longer, bubble breakdown means 52 that breaks down the bubbles into fine bubbles is installed in the waste gas processing tank 41 for the purpose of accelerating the neutralization reaction of

The bubble breakdown means 52 includes a shaft 52b that is driven to rotate by a motor 52a, a disk-shaped blade support hub 52c secured on the shaft 52b at an end thereof, and six blades 52d planted on the blade support hub 52c around the periphery thereof.

The shaft 52b, the blade support hub 52c and the blades 52d are all made of stainless steel, with the blades 52d being planted on the blade support hub 52c by silver-alloy brazing at equal intervals along the circumference.

The reason for employing the silver-alloy brazing for fastening the blades is that ordinary welding is not durable against corrosion by alkali solution.

The bubble breakdown means 52 is disposed so that the center of the blade support hub 52c is located above the distal end of the reactor tube 15. Thus the bubbles rising from the distal end of the reactor tube 15 hit the blades 52d that rotate at a speed of 300 rpm and are broken into fine bubbles about 3 to 5 mm in diameter.

The bubble breakdown means 52 also forms suspension of water and calcium hydroxide that is slightly insoluble in water, by mixing the calcium hydroxide powder which has been put into the waste gas processing tank 41.

The waste gas processing tank 41 is provided with a cooler 53 installed in the chamber 10 for lowering the temperature inside the tank below the temperature which the blow tube 45 can tolerate, since the neutralization reaction of scheme 2 is an exothermic reaction.

The cooler 53 has a construction such that a part of a pipe is connected to a radiator 53b, which is cooled by a fan 53a, passes through the inside of the waste gas processing tank 41 so that heat is derived from the inside of the tank and carried by a cooling medium such as water that flows through the pipe, and is dissipated from the radiator 53b.

The cooler 53 constitutes a fluid supply source that supplies the cooling medium, which is a fluid, to the waste gas processing tank 41.

The cooler 53 is accommodated in the chamber 10, thereby making it possible to achieve a denser and more compact construction of the apparatus.

Temperature in the tank is monitored with a thermocouple 54.

A pH sensor 55 is installed in the waste gas processing tank 41. A controller 61 that controls the decomposition apparatus is also installed in the chamber 10. The pH value of the alkali solution is constantly monitored by the controller 61 using the pH sensor 55. When the pH value drops to 9 (the value is 11 to 12 at the start of operation), for example, the controller 61 issues a command to an alarm means to work and stops the decomposition process.

The alarm means may be of any type as long as personnel nearby can be alerted, such as a flashing lamp or sounding.

The slurry in the waste gas processing tank 41 increases as the operation continues. Therefore, after the operation is stopped, the slurry is sent together with the alkali solution to the solid-liquid separator 62 accommodated in the chamber 10 as the fluid supply source where solid and liquid components are separated and then disposed of as waste or used in some purpose.

The alkali solution that has been separated is returned to the waste gas processing tank 41 to be reused.

Variation in the liquid level in the waste gas processing tank is detected by a level switch 56.

The solid-liquid separator 62 is accommodated in the chamber 10, thereby making it possible to achieve a denser and more compact construction of the apparatus.

In the organohalogen compound decomposition apparatus having such a constitution as described above, operation of the electromagnetic valves and ignition of the Tesla coil 14 are controlled as shown in Fig. 5 by the controller 61.

As will be apparent from this drawing, CFC gas is decomposed in this decomposition apparatus in batch process with one cycle of operation lasting for eight hours.

The operation proceeds as follows. Before CFC gas and steam are supplied, air is supplied for a predetermined period (3 minutes) in order to purge residual moisture. After the supply of air is stopped, argon gas is supplied for the purpose of stabilizing the ignition.

While the argon gas is being supplied, microwaves are generated to cause ignition by means of the Tesla coil while the steam and CFC gas are supplied. Thereafter the supply of argon gas is stopped.

When the operation of the decomposition process is stopped, air is supplied for a predetermined period (5 minutes) to purge the residual acidic gas in order to ensure safety.

In the process described above, while there is a period when the supply of argon gas and the supply of CFC gas are carried out at the same time, this period after starting the supply of CFC gas before stopping the supply of argon gas may be a very short period of time.

This is because it becomes unnecessary to supply argon gas once the ignition has stabilized, and consumption of argon gas should be minimized in order to lower the running cost.

The controller 61 receives signals from various sensors such as pressure sensors 23, 33, thermocouples 36, 54, level switches 27, 56 and an optical sensor 17, thereby constantly monitoring the pressures of the argon gas and CFC gas supplied to the heater 18, liquid level in the water tank 26, condition of the plasma, temperature and liquid level in the waste gas processing tank 41. When any of these signals deviates from a permissible range, there is a possibility that the operation is not going on normally, and therefore the operation is stopped.

When the operation is stopped, air is supplied to purge the residual gas from the inside of the system for safety, as described above.

In the following, the operation of the decomposition apparatus according to this embodiment will be described.

In this decomposition apparatus, first the electromagnetic valves 19a, 19b are closed and, at the same time, the electromagnetic valve 19c is opened to supply air from the air compressor 24 through the gas feeder pipe 16 to the discharge tube 5 for three minutes.

Since the air is heated to a temperature from 100 to 180°C when passing the heater 18, residual moisture in the apparatus is sufficiently removed.

Then with the electromagnetic valve 19c being closed and the electromagnetic valve 19a opened, argon gas is supplied to the discharge tube 5.

Since the argon gas is supplied in the tangential direction of the outer tube 12 and flows down spirally, a stagnant portion is formed near the end of the inner tube 11 that makes it easier to maintain the plasma.

Flow rate of supplying the gas is set in a range from 4 to 40 liters/min, preferably 15 liters/min or more.

When the gas is supplied at this rate, the stagnant portion is effectively formed so that it is made more easier to maintain the plasma, with the discharge tube 5 becoming less susceptible to the influence of heat from the plasma, thereby effectively preventing the discharge tube from being melting, deforming or being damaged.

Upon lapse of a predetermined period of time after starting the supply of argon gas, the microwave oscillator 2 generates microwaves.

The microwaves are transmitted through the rectangular waveguide 1 to the distal end thereof, and further into the circular waveguide 7.

The microwaves are transmitted in the circular waveguide 7 in $TM_{01}$ mode that has high electric field intensity. Moreover, because the inner conductor 9 couples the electric field mode in the rectangular waveguide 1 and the electric field mode in the circular waveguide 7, the electric field in the circular waveguide 7 is stabilized.

Magnetic field is generated in a direction perpendicular to the electric field, as a matter of course, and the oscillating electromagnetic fields heats the gas introduced into the discharge tube 15 and the brings the gas into a plasma phase.

Then the igniter 13 generates a high voltage thereby causing spark discharge between the Tesla coil 14 and the inner tube 11 for ignition.

Ignition occurs easily since moisture in the discharge tube 5 has been purged by the air, and since argon gas which helps ignition has been supplied.

Then water is pumped up from the water tank 26 by the plunger pump 25 and is supplied to the heater 18 to generate steam which is supplied to the discharge tube 5.

Since the steam does not flow freely through the passage due to the resistive material 35 that fills the inside of the heater 18, there exists always a constant amount of steam staying in the heater 18.

This prevents pulsing and scattering due to sudden boiling thereby stabilizing the flow rate of steam, and effectively suppressing the variation in the flow rate in the upstream of the mixer 37.

As a result, plasma can be stabilized without causing the loss of plasma, and the processing capability can be increased.

Then the electromagnetic valve 19b is opened to supply CFC gas to the discharge tube 5.

The CFC gas flowing out of the recovered CFC cylinder 28 is free from oil and moisture which have been removed while passing through the mist separator 32.

This prevents the lubricant contained in the CFC gas from contaminating the piping and other components and prevents by-products from being produced. Consequently, efficient and stable supply of CFC gas is made possible, and excessive supply of water that would cause the loss of plasma can be avoided.

Thus the plasma can be stabilized and the processing capacity can be increased.

Mixing of the steam, argon gas and CFC gas that have passed the heater 18 and entered the mixer 37 is accelerated not only by the pressure loss that is caused when they pass the aperture 38a of the orifice plate 38 but also by collision of the gases against the end face 37A on the outlet side, and therefore mixture of the gases that are uniformly mixed exits from the mixer 37 and enters the discharge tube 5.

As a result, the decomposing reaction of scheme 1 proceeds satisfactorily, while minimizing the generation of by-products such as chlorine gas and carbon monoxide.

When the CFC gas that has been supplied to the discharge tube 5 is irradiated with microwaves, thermal plasma having high electron energy and a temperature raised as high as 2000 to 6000 K is generated in the discharge tube 5.

Since argon gas is supplied as well as the CFC gas and steam to the discharge tube 5, loss of plasma will not be caused.

Also because the end of the inner tube 11 is positioned at a predetermined distance inward from the distal end of the probe antenna 9a, the inner tube 11 can be prevented from being melted or damaged by the heat of the plasma thus generated.

Thus stable decomposition process can be maintained by preventing significant change in the shape of plasma.

Thus as the CFC gas is more easily dissociated into chlorine atoms, fluorine atoms and hydrogen atoms by the thermal plasma, the CFC gas can readily react with steam and dissociate according to scheme 1.

When the plasma has stabilized, the electromagnetic valve 19a is closed to stop the supply of argon gas.

Product gas of the decomposition reaction passes the detachable joint 44 and the blow tube 45 to be blown into the alkali solution contained in the waste gas processing tank 41.

Since the product gas is at a very high temperature, however, it is cooled to about 400°C by the cooling jacket 46 installed below the reactor tube 15 before entering the blow tube 45.

Since the residual steam in the reaction tube 15 does not condense at this temperature, the reactor tube 15 is kept dry and loss of plasma will not result.

The cooling water of the cooling jacket 46 which has been warmed to about 50°C by cooling the reactor tube 15 is sent to a heater 47 installed on the recovered CFC cylinder 28, so as to prevent frosting on the cylinder 28 and the piping located downstream thereof due to evaporation of liquid CFC in the recovered CFC cylinder 28, as well as preventing the pressure from fluctuating due to temperature drop.

The cooling water that has lost the heat as described above can be used again as the cooling water of the cooling jacket 46, thereby reducing the water consumption.

The product gas that has been cooled by the cooling jacket 46 is further cooled quickly to about 100°C or lower by the cooling water discharged from the water nozzle 51 while passing through the detachable joint 44.

This allows the blow tube 45 made of a resin to be used within the tolerable temperature range thereof, while protecting the tube from thermal damage at high temperatures.

Although the detachable joint 44 will be gradually corroded since an acidic solution is generated as the product gas of the decomposition reaction represented by scheme 1 is dissolved into the cooling water, the detachable joint may be replaced with a new one when corroded.

Since only the detachable joint 44 is required to be replaced when corroded in the downstream portion of the reactor tube 15, equipment cost can be reduced further and the replacement operation can be simplified.

The product gas which is blown into the alkali solution from the blow tube 45 is neutralized to be harmless in the neutralization reaction of scheme 2, and is released through the exhaust duct 42.

Since the neutralization reaction is an exothermic reaction, the alkali solution is maintained at a temperature not higher than 70°C by the cooler 53 in order to protect the blow tube 45 from thermal damage.

The product gas discharged in the form of bubbles from the end of the blow tube 45 is broken into fine bubbles upon colliding against the blades 52d of the bubble breakdown means 52. Thus the area of contact with the alkali solution increases and the time taken for the bubbles to reach the liquid surface becomes longer, thereby accelerating the neutralization reaction.

Thus such a problem is eliminated as excessive amount of acidic gas is released out of the system due to insufficient neutralization.

The neutralization product generated in the neutralization reaction precipitates as slurry in the alkali solution. Accordingly, after the decomposition process is stopped, the slurry is accepted together with the alkali solution to the solid-liquid separator 62, where solid and liquid components are separated continuously.

Since the thus-separated liquid is returned to the waste gas processing tank 41 to be reused, water consumption in this decomposition apparatus is greatly reduced due in part to the reuse of the cooling water.

When the operation of the decomposition process is stopped, the air compressor 24 is operated to purge the residual acidic gas in order to ensure safety.

The organohalogen compound decomposition apparatus of the present invention is not limited to the embodiment described above, and includes the following forms.

(1) As means for accelerating the mixing in the mixer 37, inside of the mixer 37 may be filled with beads or the like, instead of using the orifice plate 38.

In this constitution, since the CFC and other gases and steam flow randomly through narrow spaces formed in the mixer 37, mixing is accelerated.

Also a plurality of baffle plates may be installed on the inner circumferential surface of the mixer 37 at intervals vertically or horizontally (static mixer).

In this constitution, since the CFC and other gases and steam flow while meandering, mixing is accelerated.

The pipe connected to the inlet of the mixer 37 may also be inclined with respect to the direction of flow, while a guide plate is installed on the inner circumferential surface of the mixer 37 and extends spirally (swirling mixer).

In this constitution, since the CFC and other gases and steam flow spirally, mixing is accelerated.

(2) Instead of the pH value of the alkali solution, motor current may be monitored to prevent the release of acidic gas to the outside of the system due to insufficient neutralization.

If rotation speed of the motor decreases or the motor stops the rotation, bubbles supplied from the blow tube 45 may not be broken down sufficiently, resulting in insufficient neutralization.

When rotation failure of the motor is detected by means of the motor current and the operation of the decomposition apparatus is stopped by a command from the controller 61, the release of acidic gas to the outside of the system can be prevented.

(3) The inside of the reactor tube 15 is kept always dry and is therefore not likely to be corroded by the acidic gas generated in the decomposition reaction of scheme 1.

However, in order to improve safety further, a simplified booth may be installed to enclose the reactor tube 15 while an exhaust gas sensor that detects $CO_2$ gas, CO gas and other gases is installed between the booth and the reactor tube 15.

In this constitution, corrosion of the reactor tube 15 can be constantly monitored by the controller 61 by means of the exhaust gas sensor. If the reactor tube 15 becomes corroded and the gas generated in the decomposition reaction of scheme 1 leaks out of the reactor tube 15, the controller 61 sends a command to stop the operation of the decomposition apparatus and the product gas that has leaked can be drawn thereby preventing the acidic gas from being released to the outside of the system.

The blower 43 installed in the exhaust duct 42 may also be used for drawing the gas.

(4) Slurry in the waste gas processing tank 41 settles when left to stand overnight after the operation is stopped. Thus concentrated slurry that has settled may be taken out by a pump and the liquid may be separated from the solid component which is then disposed of.

In this case, since only the concentrated slurry can be taken out without being mixed with the alkali solution that has been separated, the slurry can be processed with high efficiency.

The settling time can be made shorter and the slurry can be processed more efficiently by the addition of a granulating agent, coagulant or the like to the alkali solution thereby increasing the size of the slurry particles.

(5) Instead of disposing the end of the Tesla coil 14 inside the discharge tube 5, it may be placed outside the discharge tube 5 so as to cause ignition by spark discharge.

(6) Instead of heating the recovered CFC cylinder 28 to gasify CFCs and withdraw the CFC gas, the recovered CFC cylinder 28 may be placed upside-down to withdraw the recovered CFCs in the state of liquid, while allowing the CFCs to pass through a throttle device such as a differential pressure control valve thereby maintaining a constant flow rate, with the CFC then being heated and gasified and sent to the heater 18.

In this case, fluctuation of the flow rate due to temperature drop can be restrained by heating the throttle device and the piping.

(7) The recovered CFC cylinder 28 may be heated by the cooling water of the cooler 53 used in cooling the slurry in the waste gas processing tank 41, instead of the cooling water used in cooling the reactor tube 15.

(8) The length by which the distal end of the inner tube 11 is located from the end of the probe antenna 9a inward is most preferably set to be equal to the distance between the end of the probe antenna 9a and the focus where the microwave energy is concentrated, as long as the inner tube 11 does not melt, although this length may be changed in consideration of melting of the inner tube 11.

(9) The bubble breakdown means 52 may also include a screw having a propeller fastened at the distal end of the shaft thereof.

The bubble breakdown means 52 may also have components 52b, 52c, 52d made of a resin such as a fluorocarbon resin that are fastened by screws.

In this constitution, since there is no welded portion and the components 52b, 52c, 52d are made of a resin, extremely high resistance to corrosion is ensured.

(10) The distal end of the blow tube 45 may be formed in substantially U shape, instead of inclining by the predetermined angle from the vertical direction.

(11) The neutralization solution stored in the waste gas processing tank 41 is not limited to the alkali suspension described above, and an alkali solution such as sodium hydroxide solution may also be used.

Industrial Applicability

As will be apparent from the foregoing description, the present invention is capable of achieving the following effects.

(a) In the first organohalogen compound decomposition apparatus, since the rectangular waveguide is disposed to extend horizontally, the height can be kept low thus making it possible to achieve the decomposition apparatus of a denser and compact construction.

(b) In the second organohalogen compound decomposition apparatus, since the fluids supplied into the reactor tube flow in a straight passage, there is no obstruction to the flow of fluid by bending passage, and hold-up of the fluid does not occur. Also because the space above the waste gas processing tank can be utilized effectively, a space to accommodate ancillary apparatuses can be secured below the rectangular waveguide. Thus the decomposition apparatus can have a dense and compact construction.

(c) In the third organohalogen compound decomposition apparatus, the chamber is provided below the rectangular waveguide and beside the waste gas processing tank. Therefore, the space below the rectangular waveguide can be effectively utilized, and the apparatus can have a dense and compact construction.

(d) In the fourth organohalogen compound decomposition apparatus, the chamber houses fluid sources that supply fluids to the waste gas processing tank. Therefore, a rare gas cylinder or a water tank can be housed in the chamber as the fluid sources to effectively utilize the space below the rectangular waveguide, and the apparatus can have a dense and compact construction.

(e) In the fifth organohalogen compound decomposition apparatus, with ancillary apparatuses of the decomposition apparatus being housed in the chamber, the space below the rectangular waveguide can be effectively utilized, and the apparatus can have a dense and compact construction.

## Claims

1. An apparatus for decomposing organohalogen compounds, including a waste gas processing tank (41) that contains an alkali solution, a blow tube (45) having an opening at one end thereof which is immersed in the alkali solution, a reactor tube (15) connected to said blow tube (45) and a rectangular waveguide (1) connected to the top of said reactor tube (15), wherein said rectangular waveguide (1) extends horizontally.

2. An apparatus for decomposing organohalogen compounds according to claim 1, wherein said blow tube (45) and said reactor tube (15) are connected substantially straight, and said reactor tube (15) is located above the waste gas processing tank (41).

3. An apparatus for decomposing organohalogen compounds according to claim 1 or 2, wherein a chamber (10) is provided below rectangular waveguide (1) and beside said waste gas processing tank (41).

4. An apparatus for decomposing organohalogen compounds according to claim 3, wherein fluid supply sources (21, 24, 26) that supply fluids to said waste gas processing tank (41) are housed in said chamber (10).

5. An apparatus for decomposing organohalogen compounds according to claim 3 or 4, wherein at least one among a cooler (53) that cools the processing liquid contained in said waste gas processing tank (41), a solid-liquid separator (62) that takes out the processing liquid and separates solids and liquids, a gas cylinder (21) that supplies gas to said reactor tube (15), an air compressor (24) that supplies air to said reactor tube (15), a water tank (26) that supplies water to said reactor tube (15) and a controller (61) that controls the decomposition process is housed in said chamber (10).

# FIG. 1

EP 1 093 848 A1

# FIG. 2

EP 1 093 848 A1

FIG. 3

## FIG. 4

## FIG. 5

MICROWAVES

ON

OFF

ARGON GAS

TESLA COIL

STEAM

CFC GAS

AIR

8 HOURS

START OF
OPERATION

COMPLETION OF
OPERATION

# INTERNATIONAL SEARCH REPORT

International application No.

PCT/JP00/02367

| A. CLASSIFICATION OF SUBJECT MATTER |
|---|
| Int.Cl⁷ B01J19/08, B01D53/70 |

According to International Patent Classification (IPC) or to both national classification and IPC

| B. FIELDS SEARCHED |
|---|
| Minimum documentation searched (classification system followed by classification symbols) |
| Int.Cl⁷ B01J19/00-19/32, B01D 53/30-53/96, A62D3/00 |

Documentation searched other than minimum documentation to the extent that such documents are included in the fields searched
Jitsuyo Shinan Koho        1926-1996     Toroku Jitsuyo Shinan Koho  1994-2000
Kokai Jitsuyo Shinan Koho  1971-2000     Jitsuyo Shinan Toroku Koho  1996-2000

Electronic data base consulted during the international search (name of data base and, where practicable, search terms used)
WPI (DIALOG)

## C. DOCUMENTS CONSIDERED TO BE RELEVANT

| Category* | Citation of document, with indication, where appropriate, of the relevant passages | Relevant to claim No. |
|---|---|---|
| Y | JP, 8-323133, A (Nippon Steel Corporation),<br>10 December, 1996 (10.12.96),<br>Fig. 1  (Family: none) | 1-5 |
| Y | US, 5965786, A (L'Air Liquide Societe Anonyme Pour L'Etude Et L'Exploitation Des Procedes Georges Claude),<br>12 October, 1999 (12.10.99),<br>Fig. 1<br>& EP, 820801, A     & FR, 2751565, A<br>& JP, 10-165753, A | 1-5 |
| Y | US, 5028452, A (Creative Systems Engineering,Inc.),<br>02 July, 1991 (02.07.91),<br>Column 5, lines 42 to 44<br>& WO, 9104104, A     & EP, 448660, A<br>& JP, 4-502882, A     & CN, 1057010, A<br>& DE, 69032066, A | 1-5 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>30 June, 2000 (30.06.00) | Date of mailing of the international search report<br>11 July, 2000 (11.07.00) |
|---|---|
| Name and mailing address of the ISA/<br>Japanese Patent Office | Authorized officer |
| Facsimile No. | Telephone No. |

Form PCT/ISA/210 (second sheet) (July 1992)